# EUROPÄISCHE PATENTANMELDUNG

(11) **EP 2 720 070 A1**
(43) Veröffentlichungstag der Anmeldung: **16.04.2014**
(21) Anmeldenummer: 13187938.9
(22) Anmeldetag: 09.10.2013
(51) Int. Cl.: G01W 1/14

(54) **Niederschlagsmessgerät**

(30) Priorität: 09.10.2012 DE 102012019743
(71) Anmelder: Wilh. Lambrecht GmbH, 37085 Göttingen (DE)
(72) Erfinder: Oldendorf, Christian, 37077 Göttingen (DE); Weihmüller, Daniel, 37308 Heiligenstadt (DE); Mosdzien, Björn, 37127 Scheden (DE); Bielefeld, Heinrich, 37133 Friedland (DE)
(74) Vertreter: Schneider, Peter Christian

(57) **Zusammenfassung**

Die Erfindung bezieht sich auf ein Niederschlagsmessgerät (1) mit einem Auffangtrichter (3) zum Auffangen von Niederschlag, dessen Auslass (9) ein Niederschlagssensor (4) nachgeordnet ist, wobei der Niederschlagssensor (4) eine Kippwaage (11) mit einem um eine horizontale Kippachse (17) kippbaren Kippgefäß (13) mit zwei Kammern (14, 15) aufweist und wobei die Kippwaage (11) auf einem Wägesensor (12) angeordnet ist, und mit einer programmierbaren Auswerteeinheit (34) versehen ist, wobei der Wägesensor (12) als ein einseitig eingespannter Biegebalken (30) mit Dehnmessstreifen als Messsensoren ausgebildet ist.

Die Erfindung zeichnet sich dadurch aus, dass die Kippachse (17) des Kippgefäßes (13) parallel zur Längsachse des Biegebalkens (30) verläuft und abzuleitende Flüssigkeit in horizontaler Richtung quer zur Längsachse in die Umgebung ableitbar ist,
dass die Kippachse (17) von in Gegenlagern (18, 19) gelagerten Achsstiften (20) gebildet wird, und
dass das erste Gegenlager (18) als ein Festlager ausgebildet ist, gegen das das Kippgefäß (13) von einem in dem zweiten Gegenlager (19) längsverschieblich angeordneten Druckelement drückbar ist.

## Beschreibung

### Gebiet der Erfindung

Die Erfindung betrifft ein Niederschlagsmessgerät mit einem Auffangtrichter zum Auffangen von Niederschlag, dessen Auslass ein Niederschlagssensor nachgeordnet ist, wobei der Niederschlagssensor eine Kippwaage mit einem um eine horizontale Kippachse kippbaren Kippgefäß mit zwei Kammern aufweist und wobei die Kippwaage auf einem Wägesensor angeordnet ist, und mit einer programmierbaren Auswerteeinheit versehen ist, wobei der Wägesensor als ein einseitig eingespannter Biegebalken mit Dehnmessstreifen als Messsensoren ausgebildet ist.

Die Erfindung betrifft weiterhin ein Verfahren zur Niederschlagsmessung mit einem Niederschlagsmessgerät, bei dem Niederschlag in einem Auffangtrichter gesammelt und über einen Auslass einer Kammer eines Kippgefäßes eines nachgeordneten als Kippwaage ausgebildeten Niederschlagssensors, der auf einem Wägesensor angeordnet ist, zugeführt und von einer Auswerteeinheit ausgewertet wird.

### Stand der Technik

Die Niederschlagsmessung ist eine der wichtigsten meteorologischen Größen. Vor dem Hintergrund eines drohenden Klimawandels und Naturkatastrophen nehmen Niederschlagsmessungen einen zunehmenden Stellenwert ein, wobei der Messgenauigkeit eine besondere Bedeutung zukommt.

Aus der JP 61-079 184 A ist ein Niederschlagsmessgerät mit einem Auffangtrichter zum Auffangen von Niederschlag bekannt. Dem Auslass des Auffangtrichters ist ein Niederschlagssensor nachgeordnet. Der Niederschlagssensor umfasst eine Kippwaage mit einem um eine horizontale Kippachse kippbaren Kippgefäß mit zwei Kammern. Die Kippwaage ist auf einem als einseitig eingespannter Biegebalken mit Dehnmessstreifen ausgebildeten Wägesensor angeordnet. Dabei wird das momentane Gewicht der in dem Kippgefäß befindlichen Niederschlagsmenge periodisch gemessen. Weiterhin ist die Kippwaage mit einer Auswerteeinheit versehen

Nachteilig dabei ist, dass die Kippachse quer zur Längsachse des Biegebalkens und seitlich am Kippgefäß angeordnet ist. Dies bedingt zur Vermeidung eines unerwünschten Torsionsmomentes auf den Biegebalken entweder eine komplizierte gabelförmige Ausbildung oder einen zusätzlichen Biegebalken. Weiterhin nachteilig ist, dass die Kammern des Kippgefäßes in Längsrichtung der Kippachse nicht mittig vertieft ausgebildet sind. Bei geringem Niederschlag können sich einzelne Tropfen somit auf der gesamten Längsrichtung verteilen und nicht an einer vordefinierten Stelle. Eine Folge ist, dass dieselbe Niederschlagsmenge durch ihre auf der Längsrichtung willkürlich angeordnete Position, positionsabhängig sowohl eine geringe als auch eine hohe Hebelwirkung verursachen kann und damit Messungenauigkeiten in der Bestimmung der Niederschlagsmenge resultieren können.

Aus der DE 89 00 782 U1 ist ein Niederschlagsmessgerät mit einem Auffangtrichter zum Auffangen von Niederschlag bekannt. Der Auffangtrichter weist einen Auslass auf, dem ein Niederschlagssensor nachgeordnet ist. Der Niederschlagssensor weist ein um eine horizontale Kippachse kippbares Kippgefäß auf, das mithilfe eines Spannbandes gelagert ist und als ein Zweistellungskippgefäß mit zwei Kammern eine so genannte Kippwaage bildet. Die Kippwaage ist dabei auf einem Wägesensor angeordnet, der als ein Feinwäge-Messsystem ausgebildet ist, über das das momentane Gewicht des Kippgefäßes/der Kippwaage erfasst wird. Weiterhin ist eine Auswerteschaltung vorgesehen, die eine programmierbare Auswerteeinheit bildet.

Die von dem Kippgefäß aufgefangene Niederschlagsmenge wird wechselweise in zwei Flüssigkeitssammelbehälter, die ihrerseits auf einer Waage angeordnet sind, entleert, wobei ein Zählimpuls an die Auswerteeinheit gegeben wird.

Nachteilig dabei ist, dass die bekannten Feinwäge-Messsysteme eine relativ aufwendige Parallelführung aufweisen, entsprechend teuer und wenig resistent gegen Umwelteinflüsse sind. Auch führen die zusätzliche Waage und die Verwendung von Sammelbehältern zu entsprechenden Mehrkosten. Durch das Zählen von Kippvorgängen und der Wägung von Sammelbehältern kann es zudem zu Einschränkungen und zusätzlichen Ungenauigkeiten kommen.

Aus der DE 39 35 333 A1 ist ein Niederschlagsmessgerät mit einem Auffangtrichter zum Auffangen von Niederschlag bekannt, dessen Auslass ein Niederschlagssensor nachgeordnet ist. Der Niederschlagssensor weist ein um eine horizontale Kippachse kippbares Gefäß auf, das an einer mit elektrischen Dehnmessstreifen versehenen Wägevorrichtung, die als ein einseitig eingespannter Biegebalken ausgeführt ist, drehbar befestigt ist. Dabei wird das momentane Gewicht der in dem Kippgefäß befindlichen Niederschlagsmenge gemessen.

Nachteilig dabei ist, dass das kippbare Gefäß nur eine einzige Kammer zum Sammeln des Niederschlags umfasst und relativ aufwendig über seine Kippachse und ein Doppelkugellager an dem Biegebalken gelagert ist. Wegen der einzigen Kammer des kippbaren Gefäßes muss das Kippen aktiv mittels eines an einer Motorwand angebrachten Motors realisiert werden, der über eine Nut an einem Stegstück des Kippgefäßes angreift und das Kippgefäß somit durch eine Drehung entleert. Während dieser Drehung muss der Niederschlag mittels eines zwischen Auslass und Kammer angeordneten Vorgefäßes, das ebenfalls kippbar ausgebildet ist, zwischengespeichert und erst nach vollständiger Entleerung des kippbaren Gefäßes in dieses weitergeleitet werden. Die bekannte Vorrichtung ist daher sehr wartungs- und kostenintensiv. Zudem verkompliziert das Betreiben eines Motors die gesamte Handhabung eines Niederschlagsmessgeräts.

Aus der DE 691 00 861 T2 ist ein Niederschlagsmessgerät mit Auffangtrichter bekannt. Der Auffangtrichter hat einen Niederschlagssensor nachgeordnet, dem der aufgefangene Niederschlag über einen Auslass am Auffangtrichter zugeführt wird. Mittels eines optischen Sensors kann die Verstopfung des Auslass gemessen werden. Der Niederschlagssensor weist eine Kippwaage mit einem Kippgefäß mit horizontaler Kippachse und zwei Kammern auf. Bei einem bestimmten Niederschlagsfüllstand kippt das Kippgefäß. Hierbei wird die die Kippbewegung auslösende Kammer entleert und die andere, zuvor leere Kammer nimmt den aus dem Auffangtrichter kommenden Niederschlag auf. Durch das Zählen der Kippbewegung des Kippgefäßes kann die Niederschlagsmenge ermittelt werden.

Nachteilig dabei ist, dass die Bestimmung der Niederschlagsmenge das momentane Gewicht des mit Niederschlag gefüllten Kippgefäßes nicht berücksichtigt. Vielmehr wird die Niederschlagsmenge durch das Zählen der Kippbewegung des Kippgefäßes ermittelt. Da eine solche Kippbewegung durch einen bestimmten, erreichten Niederschlagsfüllstand ausgelöst wird, können geringe Niederschlagsmengen nicht korrekt erfasst werden.

### Aufgabenstellung

Es ist die Aufgabe der vorliegenden Erfindung, das bekannte Niederschlagsmessgerät und das bekannte Verfahren zur Niederschlagsmessung so zu verbessern, dass einerseits die Auflösung und Genauigkeit erhöht wird und dass andererseits durch Vereinfachung der Vorrichtung die Herstellkosten verringert und durch Optimierung des Verfahrens die Messsicherheit erhöht wird.

### Darlegung der Erfindung

Die Aufgabe bezüglich des Niederschlagsmessgerätes wird in Verbindung mit den Merkmalen des Oberbegriffs von Anspruch 1 dadurch gelöst, dass die Kippachse des Kippgefäßes parallel zur Längsachse des Biegebalkens verläuft und abzuleitende Flüssigkeit in horizontaler Richtung quer zur Längsachse in die Umgebung ableitbar ist, dass die Kippachse von in Gegenlagern gelagerten Achsstiften gebildet wird, und dass das erste Gegenlager als ein Festlager ausgebildet ist, gegen das das Kippgefäß von einem in dem zweiten Gegenlager längsverschieblich angeordneten Druckelement drückbar ist.

Durch die Ausbildung des zweiten Sensors als einseitig eingespannten Biegebalken mit Dehnmessstreifen als Messsensoren, wird auf eine aufwendige Parallelführung verzichtet. Als Biegebalken kann beispielsweise eine Blattfeder verwendet werden, auf die eine Dehnmessschaltung, beispielsweise in einer Dünnschichtabscheidung durch sogenanntes Sputtern, aufgebracht ist. Dadurch, dass die Kippachse des Kippgefäßes parallel zur Längsachse des Biegebalkens verläuft und abzuleitende Flüssigkeit in horizontaler Richtung quer zur Längsachse in die Umgebung ableitbar ist, wird zum einen der Wägesensor bzw. der Biegebalken frei von Verschmutzung mit Niederschlagsflüssigkeit gehalten und zum anderen wird auf zusätzliche Sammelbehälter mit einem weiteren Wägesystem gänzlich verzichtet. Durch die Ausbildung der Kippachse von in Gegenlagern gelagerten Achsstiften und die Ausbildung des ersten Gegenlagers als Festlager, gegen das das Kippgefäß von einem in dem zweiten Gegenlager längsverschieblich angeordneten Druckelement drückbar ist, wird auf einfache Weise erreicht, dass das Kippgefäß gegenüber dem Biegebalken immer in der gleichen Position angeordnet ist, was zu einer Erhöhung der Genauigkeit beiträgt.

Gemäß einer weiteren bevorzugten Ausführungsform der Erfindung sind zur Zentrierung der Niederschlagsflüssigkeit die Kammern mittig vertieft ausgebildet. Dadurch wird unterstützt, dass die zentrale Gewichtskraft der Kippwaage bzw. des Kippgefäßes bezüglich des Wägesensors immer an der gleichen Stelle des Biegebalkens angreift.

Dabei weisen die Kammern eine gemeinsame Trennwand auf, die zur Mitte hin verjüngend ausgebildet ist, und die mittig zur ersten Kammer hin eine erste konkave Ausformung und mittig zur zweiten Kammer hin eine der ersten konkaven Ausformung abgewandte zweite konkave Ausformung aufweist.

Nach einer weiteren Ausführungsform der Erfindung ist der Auslass des Auffangtrichters als ein Tropfenformer ausgebildet, der die Tropfen der Niederschlagsflüssigkeit in die Mitte der zugewandten Kammer des Kippgefäßes ableitet. Zur Positionierung der Tropfen gegenüber der Kammer kann der Tropfenformer beispielsweise einen Führungsdraht zum Ableiten der Tropfen aufweisen. Auch dies trägt zu einer erhöhten Messgenauigkeit bei.

Zur Erkennung einer Verschmutzung kann der Tropfenformer einen optischen Sensor zur Erkennung von Verschmutzung aufweisen.

Gemäß einer weiteren Ausführungsform der Erfindung ist die programmierbare Auswerteeinheit als eine von einem Prozessor gesteuerte Mess- und Kontrollelektronik mit einer Istzeiterfassung der Messwerte ausgebildet. Dabei können in einem Speicher der Auswerteeinheit vorgegebene Messalgorithmen gespeichert sein.

Nach einer weiteren bevorzugten Ausführungsform der Erfindung ist von der Auswerteeinheit eine Kippung des Kippgefäßes automatisch auslösbar. So kann beispielsweise in einer Justier- oder Kalibrierfunktion der Auswerteinheit ein Justiergewicht in dem geleerten Kippgefäß positioniert werden. Das Justiergewicht ist dabei manuell oder von einer Positioniervorrichtung in einer Positionierausformung der Kammern positionierbar. Hierzu weist das Kippgefäß insbesondere in seinen Kammern eine Ausformung auf, in der das Justiergewicht hinsichtlich seiner Lage reproduzierbar positioniert werden kann.

Nach einer weiteren bevorzugten Ausführungsform der Erfindung ist das Kippgefäß monolithisch ausgebildet. Durch spanende Bearbeitung kann das Kippgefäß dabei aus einem Block ausgebildet sein. Die monolithische Ausbildung des Kippgefäßes trägt ebenfalls zur Erhöhung der Messgenauigkeit bei.

Die Aufgabe bezüglich des Verfahrens wird in Verbindung mit dem Oberbegriff des Anspruches 11 dadurch gelöst, dass der Niederschlag über einen dem Auslass in Fließrichtung nachgelagerten Tropfenformer der zugewandten, mittig vertieft ausgebildeten Kammer in Tropfenform zentral zugeführt und nach dem Kippen der gefüllten Kammer von dem Wägesensor in horizontaler Richtung quer zur Längsachse des Biegebalkens in die Umgebung abgeführt wird.

Dadurch, dass der Niederschlag über einen Tropfenformer der zugewandten Kammer in Tropfenform zentral zugeführt und nach dem Kippen der Kammer von dem Wägesensor in horizontaler Richtung quer zur Längsachse in die Umgebung abgeführt wird und die Kammern des Kippgefäßes mittig vertieft ausgebildet sind, wird einerseits auf das Auffüllen separater Sammelbehälter und deren Wägung mit einer zusätzlichen Waage verzichtet, was das Messverfahren vereinfacht und andererseits wird die Messgenauigkeit durch die zentrale Zuführung der Niederschlagstropfen die Messgenauigkeit erhöht. Des Weiteren wird der gesammelte Niederschlag mittels der mittig vertieften Kammern in der Kippwaage so positioniert, dass die zentrale Gewichtskraft an der gleichen Stelle des Biegebalkens angreift und so ebenfalls die Messgenauigkeit erhöht wird.

Gemäß einer bevorzugten Ausführungsform der Erfindung erfasst die Auswerteeinheit die inkrementelle Gewichtszunahme durch Niederschlagstropfen aus dem Auffangtrichter und detektiert die durch den Kippvorgang bei aufgefüllter Kammer ausgelöste sprunghafte Gewichtsabnahme. Die Auswerteeinheit ermittelt die Steigerung der Gewichtszunahme zwischen zwei Messpunkten und errechnet aus der Differenz der Messwerte die Niederschlagsmenge.

Nach einer weiteren bevorzugten Ausführungsform der Erfindung wird durch Ermittlung des Leergewichts, des Nutzgewichts sowie der Kippzeit, die Verschmutzung von der Lagerung des Kippgefäßes und des Kippgefäßes selbst detektiert.

Gemäß einer weiteren bevorzugten Ausführungsform der Erfindung, werden die von der Niederschlagstropfen gebildeten Niederschlagsinkremente über einen vorgegebenen Zeitraum erfasst und der Beginn und das Ende eines Niederschlagsereignisses bestimmt. Dabei wird über den zeitlichen Abstand von Niederschlagsinkrementen die Niederschlagsintensität bestimmt. Die Auswerteeinheit kann dann in Abhängigkeit von der Niederschlagsintensität zwischen vorgegebenen Messalgorithmen, die in einem Speicher der Auswerteeinheit gespeichert sind, umschalten.

Gemäß einer weiteren Ausführungsform der Erfindung ermittelt die Auswerteeinheit Abweichungen zu gespeicherten Sollwerten und/oder minimiert Drifteffekte. Über gespeicherte Sollwerte und abweichende Istwerte kann beispielsweise die Verschmutzung des Kippgefäßes erkannt werden. Durch eine Differenzmessung können aber auch Abweichungen infolge von Umwelteinflüssen erkannt und kompensiert werden.

Nach einer weiteren bevorzugten Ausführungsform der Erfindung löst die Auswerteeinheit zum Justieren oder Kalibrieren eine Kippung des Kippgefäßes aus und positioniert ein Justiergewicht in dem Kippgefäß, führt die Kalibrierung des Niederschlagsensors durch und entfernt anschließend wieder das Justiergewicht. Der Justier- oder Kalibriervorgang kann insbesondere in Abhängigkeit von der Zeit und/oder der Temperatur und/oder Niederschlagsintervallen erfolgen bzw. ausgelöst werden.

Grundsätzlich kann das Justiergewicht auch manuell in die Kammer eingebracht werden. Weitere Merkmale und Vorteile der Erfindung ergeben sich aus der nachfolgenden speziellen Beschreibung und den Zeichnungen.

### Kurzbeschreibung der Zeichnungen

Es zeigen:

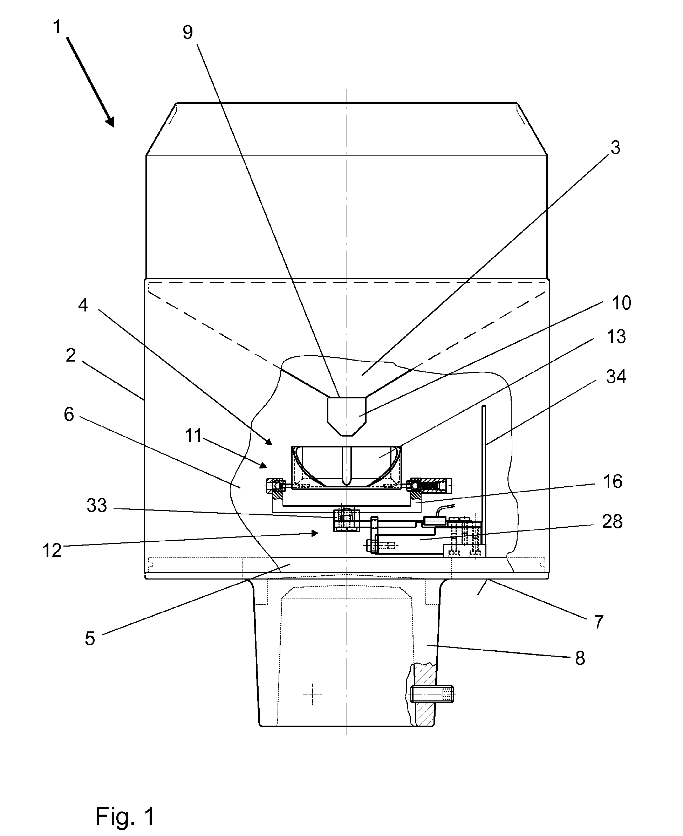

- Figur 1:: eine Seitenansicht teilweise im Schnitt eines Niederschlagsmessgerätes;

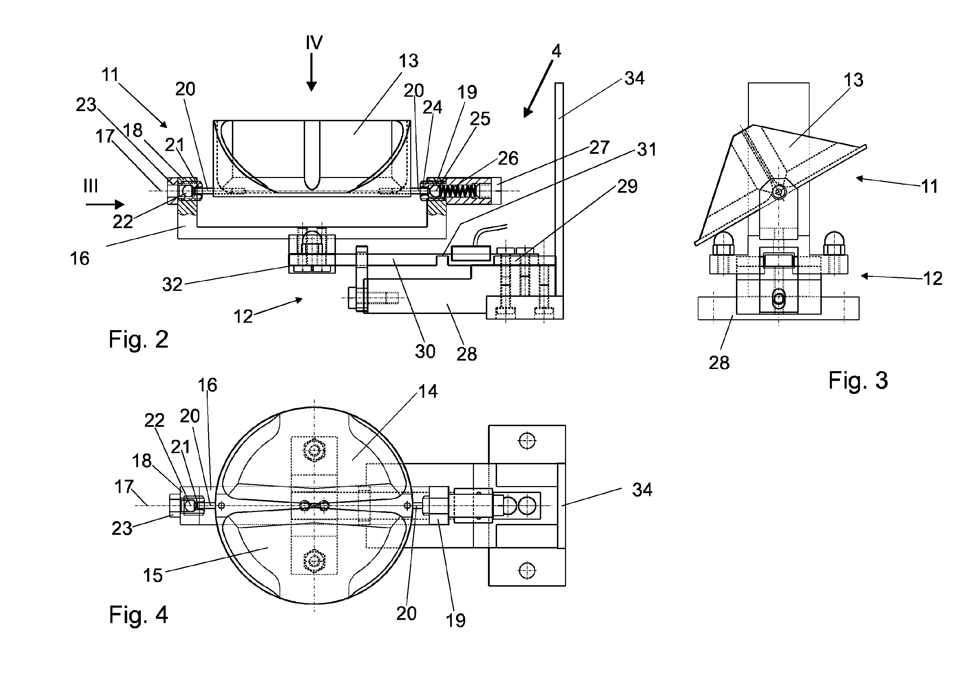

- Figur 2:: eine Seitenansicht teilweise im Schnitt des Niederschlagssensors, bestehend aus Kippwaage und Wägesensor;
- Figur 3:: eine Seitenansicht des Niederschlagssensors von Figur 2 aus Richtung III, jedoch in gekippter Stellung;
- Figur 4:: eine Draufsicht auf den Niederschlagssensor von Figur 2 aus Richtung IV;

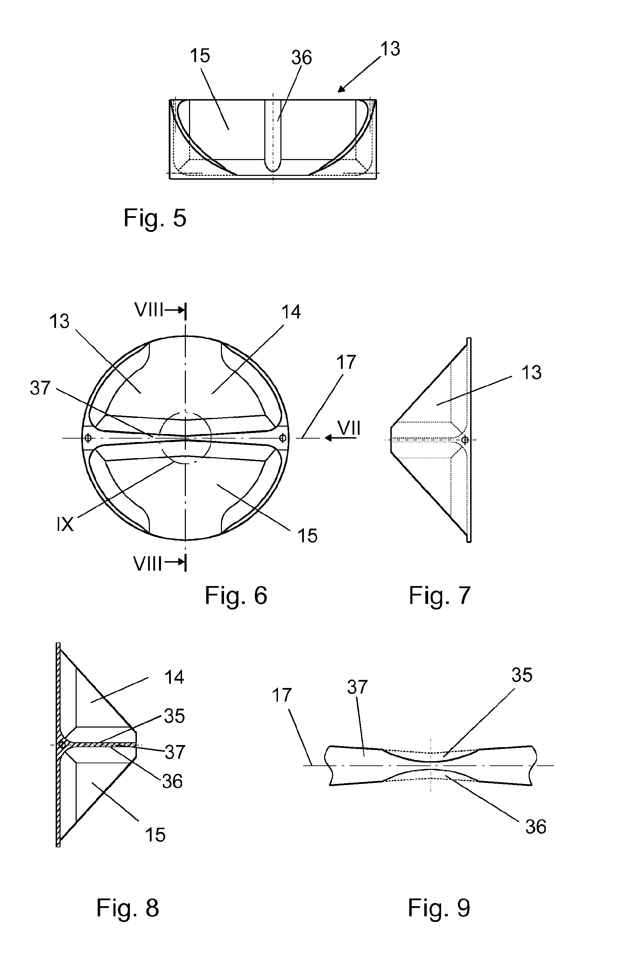

- Figur 5:: eine Seitenansicht des Kippgefäßes von Figur 2;
- Figur 6:: eine Draufsicht auf das Kippgefäß von Figur 5 aus Richtung VI;
- Figur 7:: eine Seitenansicht des Kippgefäßes von Figur 6 aus Richtung VII;
- Figur 8:: eine Seitenansicht des Kippgefäßes von Figur 6 entlang der Linie VIII-VIII geschnitten und
- Figur 9:: eine vergrößerte Darstellung der Einzelheit IX.

### Beschreibung bevorzugter Ausführungsformen

Ein Niederschlagsmessgerät 1 besteht im Wesentlichen aus einem Gehäuse 2, einem Auffangtrichter 3 und einem Niederschlagssensor 4.

Das Gehäuse 2 weist in vertikaler Richtung unten einen Boden 5 auf, auf dem zum Gehäuseinnenraum 6 hin, der Niederschlagssensor 4 befestigt ist. Auf der dem Gehäuseinnenraum 6 abgewandten Außenseite 7 weist der Boden 5 einen Fuß 8 auf. Mit dem Fuß 8 kann das Niederschlagsmessgerät 1 an einem nicht dargestellten Träger befestigt werden.

In vertikaler Richtung oben weist das Gehäuse 2 den Auffangtrichter 3 auf. Der Auffangtrichter 3 weist zum Niederschlagssensor 4 hin einen Auslass 9 mit einem Tropfenformer 10 auf.

Der Niederschlagssensor 4 besteht aus einer Kippwaage 11, die auf einem Wägesensor 12 angeordnet ist.

Die Kippwaage 11 besteht aus einem Kippgefäß 13 mit zwei seitlich benachbarten Kammern 14, 15 und ist an einem Wippenbock 16 kippbar um eine Kippachse 17 gelagert. Dabei wird die Kippachse 17 von in Gegenlagern 18, 19 des Wippenbocks 16 gelagerten Achsstiften 20 des Kippgefäßes 13 gebildet.

Die Kammern 14, 15 sind mittig vertieft ausgebildet. Dabei ist die gemeinsame Trennwand 37 zur Mitte hin verjüngend ausgebildet und weist mittig zur ersten Kammer 14 hin eine erste konkave Ausformung 35 und zur zweiten Kammer 15 hin eine der ersten konkaven Ausformung 35 abgewandte zweite konkave Ausformung 36 auf.

Das erste Gegenlager 18 weist eine Achsbohrung 21 zur Aufnahme eines Achsstiftes 20 auf, an deren Ende eine Anschlagkugel 22 angeordnet ist, die von einer Schraube 23 gesichert wird. Das zweite Gegenlager 19 weißt ebenfalls eine Achsbohrung 24 zur Aufnahme eines Achsstiftes 20 auf. Die Achsbohrung 24 wird an ihrem dem Achsstift 20 abgewandten Ende von einer Anschlagkugel 25 abgeschlossen, die gegen die Federkraft einer Druckfeder 26 längsverschieblich angeordnet ist. Die Druckfeder 26 wird an ihrem der Anschlagkugel 25 abgewandten Ende von einer Schraube 27 fixiert. Zur Montage kann das Kippgefäß 13 mit einem Ende des Achsstiftes 20 in die Achsbohrung 24 eingesetzt und gegen die Druckfeder 26 verschoben werden, so dass der gegenüberliegende zweite Achsstift mit seinem freiliegenden Ende in die Achsbohrung 21 des Gegenlagers 18 eingesetzt und von der Druckfeder 26 gegen die Anschlagkugel 22 des ersten Gegenlagers 18 gedrückt wird.

Der Wägesensor 12 besteht im Wesentlichen aus einem Basisträger 28, an dem mit einem Ende 29 ein Biegebalken 30 eingespannt ist. Die Biegestelle 31 des Biegebalkens 30 kann dabei von einer Blattfeder gebildet werden.

An dem freien Ende 32 des Biegebalkens 30 ist die Kippwaage 11 mit ihrem Wippenbock 16 über ein Verbindungsstück 33 befestigt.
Eine programmierbare Auswerteeinheit 34 kann ebenfalls an dem Basisträger 28 des Niederschlagssensors 4 angeordnet sein.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1: Niederschlagsmessgerät
- 2: Gehäuse
- 3: Auffangtrichter
- 4: Niederschlagssensor
- 5: Boden von 2
- 6: Gehäuseinnenraum vom 2
- 7: Außenseite von 5
- 8: Fuß
- 9: Auslass
- 10: Tropfenformer
- 11: Kippwaage
- 12: Wägesensor
- 13: Kippgefäß von 11
- 14: erste Kammer von 13
- 15: zweite Kammer von 13
- 16: Wippenbock von 11
- 17: Kippachse von 11
- 18: Gegenlager von 16
- 19: Gegenlager von 16
- 20: Achsstift von 13
- 21: Achsbohrung von 18
- 22: Anschlagkugel
- 23: Schraube
- 24: Achsbohrung von 19
- 25: Anschlagkugel
- 26: Druckfeder
- 27: Schraube
- 28: Basisträger von 12
- 29: Ende von 30
- 30: Biegebalken
- 31: Biegestelle von 30
- 32: freies Ende von 30
- 33: Verbindungsstück
- 34: Auswerteeinheit von 4, 12
- 35: erste Ausformung von 14
- 36: zweite Ausformung von 15
- 37: Trennwand

## Patentansprüche

1. Niederschlagsmessgerät (1) mit einem Auffangtrichter (3) zum Auffangen von Niederschlag, dessen Auslass (9) ein Niederschlagssensor (4) nachgeordnet ist, wobei der Niederschlagssensor (4) eine Kippwaage (11) mit einem um eine horizontale Kippachse (17) kippbaren Kippgefäß (13) mit zwei Kammern (14, 15) aufweist und wobei die Kippwaage (11) auf einem Wägesensor (12) angeordnet ist, und mit einer programmierbaren Auswerteeinheit (34) versehen ist, wobei der Wägesensor (12) als ein einseitig eingespannter Biegebalken (30) mit Dehnmessstreifen als Messsensoren ausgebildet ist,
**dadurch gekennzeichnet,**
**dass** die Kippachse (17) des Kippgefäßes (13) parallel zur Längsachse des Biegebalkens (30) verläuft und abzuleitende Flüssigkeit in horizontaler Richtung quer zur Längsachse in die Umgebung ableitbar ist,
**dass** die Kippachse (17) von in Gegenlagern (18, 19) gelagerten Achsstiften (20) gebildet wird, und
**dass** das erste Gegenlager (18) als ein Festlager ausgebildet ist, gegen das das Kippgefäß (13) von einem in dem zweiten Gegenlager (19) längsverschieblich angeordneten Druckelement drückbar ist.

2. Niederschlagsmessgerät nach Anspruch 1,
**dadurch gekennzeichnet,**
**dass** zur Zentrierung der Niederschlagsflüssigkeit die Kammern (14, 15) mittig vertieft ausgebildet sind.

3. Niederschlagsmessgerät nach Anspruch 1 oder 2,
**dadurch gekennzeichnet,**
**dass** die Kammern (14, 15) eine gemeinsame Trennwand (37) aufweisen, dass die Trennwand (37) zur Mitte hin verjüngend ausgebildet ist, und
**dass** die Trennwand (37) mittig zur ersten Kammer (14) hin eine erste konkave Ausformung (35) und zur zweiten Kammer (15) hin eine der ersten konkaven Ausformung (35) abgewandte zweite konkave Ausformung (36) aufweist.

4. Niederschlagsmessgerät nach einem der Ansprüche 1 bis 3,
**dadurch gekennzeichnet,**
**dass** der Auslass (9) des Auffangtrichters (3) als ein Tropfenformer (10) ausgebildet ist, der die Tropfen der Niederschlagsflüssigkeit in die Mitte der zugewandten Kammer (14, 15) des Kippgefäßes (13) ableitet.

5. Niederschlagsmessgerät nach Anspruch 4,
**dadurch gekennzeichnet,**
**dass** der Tropfenformer (10) einen optischen Sensor zur Erkennung von Verschmutzung aufweist.

6. Niederschlagsmessgerät nach einem der Ansprüche 1 bis 5,
**dadurch gekennzeichnet,**
**dass** die programmierbare Auswerteeinheit (34) als eine von einem Prozessor gesteuerte Mess- und Kontrollelektronik mit einer Istzeiterfassung der Messwerte ausgebildet ist.

7. Niederschlagsmessgerät nach Anspruch 6,
**dadurch gekennzeichnet,**
**dass** von der Auswerteeinheit (34) eine Kippung des Kippgefäßes (13) automatisch auslösbar ist.

8. Niederschlagsmessgerät nach einem der Ansprüche 1 bis 7,
**dadurch gekennzeichnet,**
**dass** in einer Justierfunktion ein Justiergewicht in dem Kippgefäß (13) positionierbar ist.

9. Niederschlagsmessgerät nach Anspruch 8,
**dadurch gekennzeichnet,**
**dass** das Justiergewicht manuell oder von einer Positioniervorrichtung in einer Positionierausformung der Kammern (14, 15) positionierbar ist.

10. Niederschlagsmessgerät nach einem der Ansprüche 1 bis 9,
**dadurch gekennzeichnet,**
**dass** das Kippgefäß (13) monolithisch ausgebildet ist.

11. Verfahren zur Niederschlagsmessung in einem Niederschlagsmessgerät (1), bei dem Niederschlag in einem Auffangtrichter (3) gesammelt und über einen Auslass (9) einer Kammer (14, 15) eines Kippgefäßes (13) eines nachgeordneten als Kippwaage (11) ausgebildeten Niederschlagssensors (4), der auf einem Wägesensor (12) angeordnet ist, zugeführt und von einer Auswerteeinheit (34) ausgewertet wird,
**dadurch gekennzeichnet,**
**dass** der Niederschlag über einen dem Auslass (9) in Fließrichtung nachgelagerten Tropfenformer (10) der zugewandten, mittig vertieft ausgebildeten Kammer (14, 15) in Tropfenform zentral zugeführt und nach dem Kippen der gefüllten Kammer (14, 15) von dem Wägesensor (12) in horizontaler Richtung quer zur Längsachse des Biegebalkens in die Umgebung abgeführt wird.

12. Verfahren nach Anspruch 11,
**dadurch gekennzeichnet,**
**dass** die Auswerteeinheit (34) die inkrementelle Gewichtszunahme durch Niederschlagstropfen aus dem Auffangtrichter (3) erfasst sowie die sprunghafte Gewichtsabnahme durch den Kippvorgang detektiert,
**dass** die Auswerteeinheit (34) die Steigerung der Gewichtszunahme zwischen zwei Messpunkten ermittelt und aus der Differenz der Messwerte die Niederschlagsmenge errechnet.

13. Verfahren nach Anspruch 11 oder 12,
**dadurch gekennzeichnet,**
**dass** durch Ermittlung des Leergewichts, des Nutzgewichts sowie der Kippzeit, die Verschmutzung von der Lagerung (18, 19) des Kippgefäßes (13) und des Kippgefäßes (13) detektiert wird.

14. Verfahren nach einem der Ansprüche 11 bis 13,
**dadurch gekennzeichnet,**
**dass** die von den Niederschlagstropfen gebildeten Niederschlagsinkremente über einen vorgegebenen Zeitraum erfasst und der Beginn und das Ende eines Niederschlagsereignisses bestimmt werden,
**dass** über den zeitlichen Abstand von Niederschlagsinkrementen die Niederschlagsintensität bestimmt wird, und
**dass** die Auswerteeinheit (34) in Abhängigkeit von der Niederschlagsintensität zwischen vorgegebenen Messalgorithmen umschaltet.

15. Verfahren nach einem der Ansprüche 11 bis 14,
**dadurch gekennzeichnet,**
**dass** die Auswerteeinheit Gewichtsdifferenzen zu Sollwerten ermittelt und/oder Drifteffekte minimiert.

16. Verfahren nach einem der Ansprüche 11 bis 15,
**dadurch gekennzeichnet,**
**dass** die Auswerteeinheit (34) zum Kalibrieren eine Kippung des Kippgefäßes (13) auslöst, ein Justiergewicht in dem Kippgefäß (13) positioniert, die Kalibrierung des Niederschlagsensors (4) durchführt und das Justiergewicht wieder entfernt.
